Europäisches Patentamt

European Patent Office

Office européen des brevets

(19)

(11) Publication number: **0 175 503**
**A1**

# (12) EUROPEAN PATENT APPLICATION

(21) Application number: **85306016.8**

(22) Date of filing: **23.08.85**

(51) Int. Cl.⁴: **G 10 L 5/06**

(30) Priority: **06.09.84 GB 8422532**

(43) Date of publication of application: **26.03.86**
**Bulletin 86/13**

(84) Designated Contracting States: **AT BE CH DE FR GB IT LI LU NL SE**

(71) Applicant: **BRITISH TELECOMMUNICATIONS plc, British Telecom Centre 81 Newgate Street, London EC1A 7AJ (GB)**

(72) Inventor: **Gibson, David Lynton, 14 Salehurst Road Rushmere St Andrew, Ipswich Suffolk IP3 8RU (GB)**

(74) Representative: **Kennington, Penelope Anne et al, British Telecom Intellectual Property Unit Room 1304, 151 Gower Street, London WC1E 6BA (GB)**

(54) Method and apparatus for use in interactive dialogue.

(57) A dialogue controller (15) and a speech recogniser (11) are provided for obtaining classified information from utterances spoken by a user in a dialogue. Templates to enable the recogniser to recognise utterances are grouped in logical templates comprising templates of a given utterance and utterances which are equivalent from the point of view of the dialogue controller for a particular part of the dialogue. A logical template CONFIRM may include templates for «Yes», spoken by different speakers and also templates for «Yeah», «Confirm» and other synonyms. The dialogue controller does not need to know which template has been matched: the logical template CONFIRM is identified and the appropriate classified information is sent to the dialogue controller. In a telephone information service, the apparatus includes a speech synthesiser (13), a telephone monitor interface (17) and a data store.

- 1 -

File Ref: A23163

WP Ref: 0075S

METHOD AND APPARATUS FOR USE IN
INTERACTIVE DIALOGUE

The present invention relates to a method and apparatus used in interactive dialogue.  In particular, it is concerned with obtaining classified information from utterances spoken by a user in a dialogue.

Speech synthesis and automatic speech recognition potentially allow users to interact with computer systems and databases using voice alone.

There is a wide variety of potential uses for speech recognisers which can successfully recognise utterances (eg words, part-words, or short phrases, depending on the type of recogniser) made by a user.  Ideally, the recogniser can be used to recognise utterances of any one of a class of users for which the recogniser has been trained. Applications include telephone information services, which could be made much more flexible than the current recorded information services, and office automation tasks where untrained people could use computer equipment.

Speech recognisers have limited vocabularies and are suited to applications such as those mentioned above, where simple, goal-orientated dialogues within limited domains of discourse take place.

Currently available speech recognisers have vocabularies of around 100 to 300 words or utterances. Before a speech recogniser can be used to recognise an utterance, a representation of the utterance to be recognised must be formed and stored.  Isolated word recognisers, for example, may extract features such as spectral or linear prediction coefficients from signals derived from a spoken word. Each word is characterised by a "feature template" comprising a set of coefficients, such as spectral coefficients, derived from a filter bank. Each word is assumed to be represented by a unique template pattern and recognition is performed by finding the best fit between an unknown feature template and those stored in memory. The term 'recognition score' is given to a number which represents the closeness of fit between two speech templates; this number usually has to exceed a specified figure called the "recognition threshold" before recognition of a word is deemed to have occurred.

The term "template" used herein refers to reference data which can be compared with input data derived from an utterance for the purpose of establishing a match (eg by exceeding a recognition threshold).

Dietrich Klugmann in an article entitled "Speaking with the Computer" Data Report Vol Vlll (1980) Sept No 3 pages 4 - 9 discusses speech recognition techniques. It describes classifiers for word patterns. A "class" is said to be all pronounciation variants of a single word. It is pointed out that a general problem with classifiers results from the fact that with large numbers of classes, speed decreases, whilst the number of allocation errors increases.

Various methods may be chosen for selecting templates. For example Lawrence Rabiner, in IEEE Translations on Acoustics, Speech and Signal Processing, Vol ASSP-26 No 1 February 1978, pages 34-42 describes the creation of templates by creating a data plot of "reference tokens" and generating templates by averaging reference tokens which are clustered together on the plot. Thus, a set of templates is created for a given word.

The present invention is not concerned with the particular method chosen for creation of templates, but with establishing templates and subsequently using those templates in a useful and convenient manner.

Problems of complexity are encountered in using speech recognisers in applications such as database enquiry systems. The present invention provides a method and apparatus which can, for certain applications, help in simplification.

According to the present invention, there is provided a method of obtaining classified information from utterances spoken by a user in a dialogue controlled by a dialogue controller, comprising establishing templates each representing an utterance in a selected vocabulary, and comparing said templates with signals derived from one or more user utterances to determine any close match, characterised by grouping together one or more templates of utterances having the same meaning and/or having equivalent meanings for the purposes of the dialogue such that at least one group comprises templates having equivalent meanings, comparing templates from at least one of said groups with signals derived from one or more utterances spoken in a user response to determine any close match, and sending classified information relating to the identity of the or each group comprising a matched template to the dialogue controller.

Note that templates of utterances said to have the "same" meaning are templates for one particular utterance, such as the word "to", which requires more than one template for the single utterance in order to cover differences of pronounciation by different speakers and/or one speaker in different contexts. Utterances having "equivalent" meanings are those such as the words red, crimson, scarlet which are different from one another but mean the same or are to be interpreted in the same way at a particular stage of dialogue which may take place.

Groups can be created for stages in possible dialogues which may occur under control of the dialogue controller, where a group created for a particular stage or stages comprises templates of utterances having equivalent

meanings at that stage or those stages. Note that although utterances may be synonymous in one part of a dialogue, they may not be in another. For example, at one stage in a dialogue a customer may be enquiring about train fares from London to Ipswich. The answer will be the same whatever London station is named as departure point; for example London, Euston and Liverpool Street are all synonymous for this enquiry and templates for these words could be included in a single group. Later in the dialogue, the customer may be enquiring about bus fares from Euston station to Liverpool Street station, so Euston and Liverpool Street must be included in two further different groups which are loaded into the recogniser for the later part of the dialogue.

The invention also provides apparatus for obtaining classified information from utterances spoken by a user in a dialogue comprising a dialogue controller arranged to control the dialogue and to communicate with a speech recogniser, in which the dialogue controller is arranged to group together one or more templates representing utterances having the same or equivalent meanings for the purposes of the dialogue where at least one group comprises templates having equivalent meanings, and the speech recogniser is adapted to compare templates within one or more of said groups with signals derived from one or more utterances spoken in a user response to identify any close match, and to send classified information relating to the identity of the or each group comprising a matched template to the dialogue controller.

Thus, templates representing the same or equivalent utterances are grouped. When recognition of one of the templates in a group occurs, information identifying the group (not the individual template) is sent to the dialogue controller. Instead of being told that a particular one of

say 300 templates has been identified, the dialogue controller is given the information that a specified one of, say, 80 groups of templates contains an identified template. This can lead to considerable simplification in the internal structure of the dialogue controller.

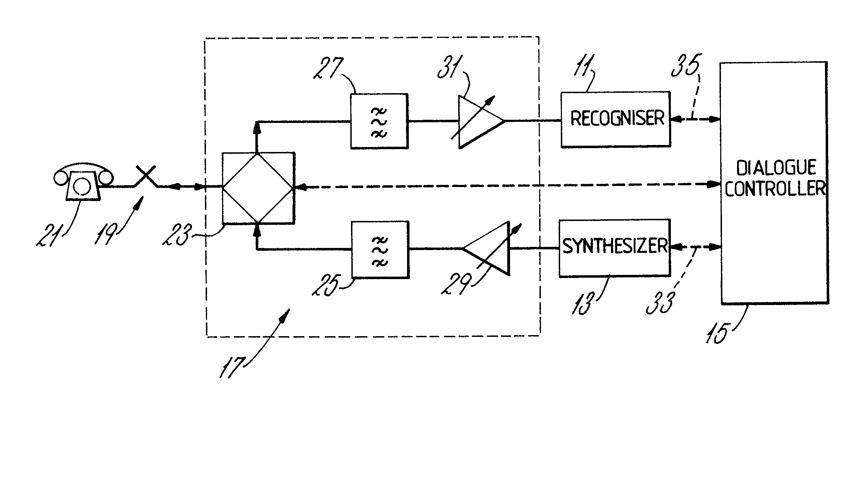

The invention will now be described by way of example with reference to the accompanying figure, which is a block diagram showing a dialogue system incorporating apparatus according to an embodiment of this invention.

The diagram illustrates a train timetable telephone information service comprising an isolated word speech recogniser 11, a speech synthesiser 13 and a dialogue controller 15. A telephone monitor interface 17 connects the speech synthesis or recognition equipment to the telephone network 19 and the caller's telephone 21. Interface 17 comprises a hybrid 23, filters 25,27 on the two arms of the hybrid and amplifiers 29 and 31. The dialogue controller 15 is connected via data links 33,35 with synthesiser 13 and recogniser 11. A data base (not shown) associated with the dialogue controller 15 holds the necessary information on train times for responding to user enquiries.

On receipt of an incoming call, the telephone monitor interface 17 notifies the dialogue controller 15 and the call is answered. Speech generated by the speech synthesiser 13 is filtered, amplified as appropriate and returned to the caller via the hybrid. Similarly, speech from the caller passes through the other arm of the hybrid, is filtered to telephone bandwidth, and is then amplified and passed to the speech recogniser 11. Recogniser 11 may be any suitable recogniser capable of handling a relatively large vocabulary, such as an Interstate VRM recogniser. Speech synthesiser 13 may be any commercially available synthesiser, for example Speech Plus "Prose 2000".

Analogue processing of the speech path is needed particularly on the recognition path. The filtering ensures that all speech signals have a fixed bandwidth irrespective of the nature of the telephone connection and has the effect of improving the noise immunity of the system as well as reducing the variability of speech from different speakers. The amplifier is provided with automatic gain control to compensate for varying received speech levels: speech level may vary between different telephone connections and also during a dialogue if the caller raises or lowers his voice.

The dialogue controller 15 is the heart of the system, and suitably comprises a number of associated modules, including a small computer. It has an associated recogniser interface comprising an applications program including low level software for controlling items of equipment, acting as an intermediary between the higher level software of the dialogue controller and the speech recogniser 11, and identifying required information. The dialogue controller 15 itself comprises high level software, which is not, in general, concerned with the details of the actual words used in the dialogue, but with the information they represent.

As mentioned above, most isolated word speech recognisers are limited to a vocabulary of 200-300 words or utterances (ie they can store 200-300 templates). In order to simplify the dialogue system as much as possible, the number of utterances to be distinguished is kept to the minimum necessary. This has the advantage that the smaller the number of templates used, the greater the recognition accuracy is likely to be. In practice, not all words used in a conversation need to be distinguishable from all others, since the dialogue controller should take account of the context of the conversation. However, the number of templates available for use must be sufficiently large to enable a reasonably natural dialogue to take place.

Clearly, for telephone information services the system must be user independent. It is therefore necessary to produce a user-independent set of templates. In order to train the Interstate VRM recogniser used by the applicants, a panel of subjects, representing a typical cross-section of the general public, was selected. Each panellist spoke each word from the vocabulary three times and the signals for each word were averaged to produce a template. The templates from one panellist were supplied to the recogniser and tested against those of another panellist. If the recognition scores were high the templates were considered to be equivalent and only one was maintained; for low scores, it was necessary to retain both templates. In this way, one or more templates were created for each vocablulary word.

Some words such as "to", "for" may be differently articulated by some people according to the context: for example if the word occurs in the middle or at the end of a sentence. For some words in the vocabulary therefore two or more templates may be needed to train a recogniser for a particular panellist.

A full set of templates for a given vocabulary may be built up using the above technique. Alternatively, one panellist's templates may be averaged with others' utterances to produce an averaged template for each vocabulary item. This creates a smaller number of templates, but low recognition scores may result for some vocabulary items. Better results could be obtained by averaging similar templates and retaining less similar ones.

Some words in the vocabulary of the recogniser 11 will have equivalent meanings for the purposes of the dialogue, or a particular part of the dialogue. As indicated above,

0175503

- 8 -

the dialogue is constrained by the dialogue controller 15 so that the user is required to give specific information during consecutive stages. In a very simple system, the user may be asked to give one word answers to questions. Suppose the user is asked to confirm something; his answer may be "Yes", "Yeah" or "Correct". All of these answers are equivalent from the point of view of the dialogue controller which simply needs to know that confirmation has been made: it does not need to know which word or words have been spoken by the user in making the confirmation. The present invention takes advantage of this by grouping all templates having the same or equivalent meanings for the purposes of the dialogue, or a stage which may occur in the dialogue, in groups which will be referred to as "logical templates". In this example, all of the logical templates (ie. groups of templates) are stored in a master store which forms part of the dialogue controller. Each logical template has an associated name classifying its meaning for the purposes of the dialogue controller.

Speech recogniser 11 is loaded with appropriate logical templates for a forthcoming part of the dialogue. If the caller has indicated that he has misunderstood the previous question, the question will simply need to be repeated and no loading or unloading of templates need occur.

For Interstate VRM, like most speech recognisers, numbering of templates is necessary because the recogniser is adapted to refer to templates by number; accordingly, on loading, each individual template is given an identification number. The numbers given are arbitrary and are allocated only for the forthcoming sub-dialogue. If particular templates are reloaded for a subsequent part of the dialogue the respective allocated numbers are likely to be different. Suppose that it has already been established that the user wishes to travel from Ipswich. The next question to be asked by the speech synthesiser, on a direction from the dialogue controller is "Where do you want to go to ?" The answer is expected to be the name of a place or station and all logical templates representing place names must be loaded into the recogniser. The high level software in the dialogue controller instructs loading and the applications program carries out the instruction. Logical templates for LONDON, FOLKESTONE etc are loaded, together with a logical template for REPEAT in case the user has not heard the question.

The logical template LONDON includes one or more templates for "London", depending on whether different members of the training panel pronounced the word in a similar way. Since a person wishing to travel from Ipswich to London will arrive in London at Liverpool Street station, the logical template LONDON also includes one or more templates for "Liverpool Street". On loading, the identification numbers given arbitrarily to the individual templates, are referenced against the names of the templates by a template load map set up by a sub-procedure in the applications program. Suppose, for example, that there are two templates for "London" numbered 00 and 01, and three for "Liverpool Street" numbered 02, 03 and 04. The template load map for the logical template LONDON would be:

| | | |
|---|---|---|
| LONDON | London 1 | 00 |
| | London 2 | 01 |
| | Liverpool Street 1 | 02 |
| | Liverpool Street 2 | 03 |
| | Liverpool Street 3 | 04 |

If the user's answer most closely matched Liverpool Street 2, the speech recogniser would send template number 03 to the applications program. The sub-procedure would translate to template C3 and logical template LONDON. The sub-procedure can be arranged to perform additional checks before identifying a particular logical template. For example, it might check to see whether the second best recognition score was obtained from Liverpool Street 1 or 3. If so the sub-procedure could indicate to the dialogue controller a higher degree of confidence in the recognition. On the other hand, if the second best recognition score was obtained for a template in a different logical template, and the two scores were close, a very low degree of confidence could be indicated, resulting in the question to the caller being repeated.

Data representing the classified information LONDON are sent to the dialogue controller in a form such that the dialogue controller can immediately make use of the information. The information is stored and appropriate further questions for subsequent steps in the dialogue prepared.

The dialogue controller is arranged to make sensible assumptions and intelligently interpret responses from the caller. For example, if the system is to provide a London-based information service, then it is reasonable to assume initially that people who use the system will want details of train services to or from London. The dialogue controller will seek to confirm such an assumption by asking a question such as "Do you wish to travel from London ?". Similarly, information derived from answers to earlier questions can be used to form subsequent questions which implicity confirm the answers to earlier questions.

Another useful facility of the system is its ability to adapt to poor speech recogition. If poor recognition scores are being achieved, lower accuracy is demanded for future recognition by making dynamic adjustments of the threshold discrimination for template matching within the recogniser. At the same time, a simpler dialogue strategy is adopted in which one word answers are to be given; with very poor recognition scores, the user is asked to respond only with "Yes" or "No".

In cases where the speech recogniser has a large enough internal store for all templates needed for a phase of dialogue, and is able to mark templates as active or passive, it is not necessary to load and unload a full set of templates for each sub-dialogue. The dialogue controller provides the applications program with a list of logical templates for a forthcoming sub-dialogue, and the applications program loads templates as necessary and activates the templates of required logical templates. (Note that for a connected word recogniser, it would be necessary to specify that certain templates are to become active only after others have been recognised, the recognised templates and all associated templates then being deactivated).

The software of dialogue controller 15 is written in ISO standard PASCAL so that it can readily be transferred to other computer systems. The software itself is structured to give the dialogue controller and the applications programs reasonable independence from the type of synthesisers and recognisers being used, so that different synthesisers and recognisers could be used if desired.

Advantages of grouping templates in logical templates will be apparent. Templates are stored in groups in a store in the dialogue controller and groups are down loaded as necessary to the smaller store in the speech recogniser. All templates grouped together are either templates of the same words (or part words or phrases) spoken by different speakers or differently articulated by one speaker, or of words which are equivalent for the purposes of the dialogue or a particular stage of dialogue. The grouping of such templates makes manipulation very much easier. The high level software in the dialogue controller need not be aware of the existence of the individual templates. It can initially instruct the applications program to download or activate certain logical templates or classes of logical template which may be needed for a sub-dialogue. Once a template has been recognised the applications program identifies the logical template to which it belongs and advises the dialogue controller. In a very straight forward manner, information is supplied to the dialogue controller in a classified form suitable for interpretation.

A dialogue is conducted with the caller until all information needed to answer the caller's enquiry has been obtained. This mostly takes the form of questions asked by the speech synthesiser 13 under the instruction of the dialogue controller 15, to elicit information from the caller to enable an answer to be given. Each answer is analysed by the speech recogniser 11 and relevant classified information sent to the dialogue controller. The information received is used for determining the subsequent course of the dialogue and/or stored until all necessary information has been received. During the course of the dialogue the dialogue controller arranges to confirm information which it has already received. For example, if the dialogue controller has found that the caller wishes to travel from Ipswich to London and the dialogue controller has next to find when the caller wishes to travel, it can ask "At what time do you want to catch a train from Ipswich to London?"

Suppose it has been established that the caller wishes to travel from Ipswich to London on a weekday, to arrive by

midday. Once the dialogue controller has all the necessary information, which it has confirmed as far as possible with the user, the train timetable database associated with the dialogue controller is consulted. This gives the information that there is a train from Ipswich at 10.21 arriving at Liverpool Street Station, London at 11.44. This information is spoken to the caller by the speech synthesiser 13.

An advantage in setting the system up is that logical templates are chosen but the choice of alternative words (synonyms) need not be made until a later stage in the design. The number of alternatives can be increased if an existing speech recogniser is replaced by one capable of handling a larger number of templates. Many changes may be made to the speech recogniser and synthesiser and the low level procedures without affecting the higher level functions of the dialogue controller which operates using classified information associated with logical templates. Thus, the system can be designed as modules - dialogue controller, recogniser, template store, synthesiser, applications and interface procedures - each of which can be enhanced and developed separately.

The use of logical templates is also helpful in setting up a dialogue control system. The system can be set-up and tested using templates produced by only one or two trainers. The speech recognisers can then be trained by an appropriate panel of people. The logical templates for the two trainers and the full panel will be the same, although of course the actual templates will be different, so that the operation of the dialogue controller will be unaffected. If the system is used for communicating with users of a computer there may be a group of, say, ten users who could train the recogniser. If some users were from time to time replaced by others, some retraining would be

0175503

- 14 -

necessary.  However, no change to the dialogue controller would be needed as the classified information associated with the logical templates would be unaltered.  An added facility which would be useful for computer applications is that the applications program can be instructed to check whether all templates being recognised during a session of one or more dialogues belong to one person;  if so future loading could be limited to templates belonging to that person.

Note that any convenient method for preparing templates may be used.  Various methods are known and some of these are discussed in the article by Rabiner referred to earlier.

## CLAIMS

1.      A method of obtaining classified information from utterances spoken by a user in a dialogue controlled by a dialogue controller, comprising establishing templates each representing an utterance in a selected vocabulary, and comparing said templates with signals derived from one or more user utterances to determine any close match, characterised by grouping together one or more templates of utterances having the same meaning and/or having equivalent meanings for the purposes of the dialogue such that at least one group comprises templates having equivalent meanings, comparing templates from at least one of said groups with signals derived from one or more utterances spoken in a user response to determine any close match, and sending classified information relating to the identity of the or each group comprising a matched template to the dialogue controller.

2.      A method as claimed in claim 1, wherein groups are created for stages in possible dialogues controlled by the dialogue controller, wherein a group created for a particular stage or stages comprises templates of utterances having equivalent meanings at said stage.

3.      A method as claimed in Claim 1 or Claim 2, wherein one or more of said groups comprises a plurality of templates of a given utterance spoken by different speakers.

4.      A method as claimed in Claim 3, whereby different speakers establish a template for a given utterance, closely similar templates being discarded prior to grouping.

5.      A method as claimed in any preceding claim, wherein one or more of said groups comprises a plurality of templates of a given utterance spoken with respective different articulations by one speaker.

6. A method as claimed in any preceding claim, including dynamically adjusting the discrimination threshold for identifying a match according to earlier recognition scores during that dialogue.

7. A method as claimed in any preceding claim, including sending a direction from the dialogue controller to a speech recogniser such that one or more selected groups of templates are ready for comparison with signals derived from said utterances.

8. A method as claimed in Claim 7, wherein the direction from the dialogue controller causes groups of templates to be downloaded from a template store to the recogniser.

9. A method as claimed in Claim 7, wherein templates are stored in the speech recogniser and a direction from the dialogue controller causes selected groups of said templates to be activated for a forthcoming part of the dialogue.

10. A method as claimed in claim 7, including sending directions from the dialogue controller to the speech recogniser for respective forthcoming parts of the dialogue and sending classified information from the speech recogniser to the dialogue controller relating to the or each group of templates comprising a matched template, thereby assimilating information necessary to establish a user enquiry, consulting a data store to obtain information necessary to respond to the enquiry and transmitting the response information to the user.

11. Apparatus for obtaining classified information from utterances spoken by a user in a dialogue comprising a dialogue controller arranged to control the dialogue and to communicate with a speech

0175503

- 17 -

recogniser, characterised in that the dialogue controller is arranged to group together one or more templates representing utterances having the same meaning or equivalent meanings for the purposes of the dialogue where at least one group comprises templates having equivalent meanings, and the speech recogniser is adapted to compare templates within one or more of said groups with signals derived from one or more utterances spoken in a user response to identify any close match, and to send classified information relating to the identity of the or each group comprising a matched template to the dialogue controller.

12.     Apparatus as claimed in claim 11, including a data store for consultation by the dialogue controller to obtain information to answer a user enquiry and transmission means for communicating with the user during the dialogue and transmitting said information.

13.     Apparatus as claimed in claim 12, wherein said transmission means comprises a speech synthesiser.

RECOGNISER

DIALOGUE CONTROLLER

SYNTHESIZER

1/1

0175503

0175503

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| X | DATA REPORT, vol. VIII, no. 3, September 1980, pages 4-9, Munich, DE; D. KLUGMANN: "Speaking with the computer" * Page 3, left-hand column, lines 3-12 * | 1,3,5, 11 | G 10 L 5/06 |
| X | IEEE TRANSACTIONS ON ACOUSTICS, SPEECH AND SIGNAL PROCESSING, vol. ASSP-26, no. 1, February 1978, pages 34-42, IEEE, New York, US; L.R. RABINER: "On creating reference templated for speaker independent recognition of isolated words" * Page 35, right-hand column, lines 5-27 * | 1,3,4, 11 | |
| X | ICASSP '82, IEEE INTERNATIONAL CONFERENCE ON ACOUSTICS, SPEECH AND SIGNAL PROCESSING, 3rd-5th May 1982, Paris, FR, vol. 1, pages 554-557, IEEE, New York, US; G.L. BRADSHAW et al.: "A comparison of learning techniques in speech recognition" * Paragraph 1.1: "Averaging and template selection techniques" * | 1 | TECHNICAL FIELDS SEARCHED (Int. Cl.4) G 10 L 5/06 |

---    -/-

The present search report has been drawn up for all claims

| Place of search | Date of completion of the search | Examiner |
|---|---|---|
| THE HAGUE | 29-11-1985 | ARMSPACH J.F.A.M. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | 1978 IEEE INTERNATIONAL CONFERENCE ON ACOUSTICS, SPEECH AND SIGNAL PROCESSING, 10th-12th April 1978, Tulsa, US, pages 546-548, IEEE, New York, US; V.N. GUPTA et al.: "Speaker-independent vowel identification in continuous speech" * Page 546: "Introduction" * | 1,3,11 | |
| A | DATAMATION, vol. 22, no. 8, August 1976, pages 65-68, Barrington, US; E.K. YASAKI: "Voice recognition comes of age" * Page 66, left-hand column, lines 38-45 * | 1,2,11 | |
| A | AUTOTESTCON '82, IEEE INTERNATIONAL AUTOMOTIVE TESTING CONFERENCE, 12th-14th Ocotober 1982, pages 480-483, Dayton, US, IEEE, New York, US; C.M. GOODING: "Voice atlas" * Page 480, right-hand column, lines 18-20 * | 1,2,11 | TECHNICAL FIELDS SEARCHED (Int. Cl.4) |
| A | FR-A-2 533 513 (REGIE NATIONALE DES USINES RENAULT) * Page 10; lines 14-16 * | 1,2 | |
| | --- -/- | | |

The present search report has been drawn up for all claims

| Place of search | Date of completion of the search | Examiner |
|---|---|---|
| THE HAGUE | 29-11-1985 | ARMSPACH J.F.A.M. |

0175503

European Patent
Office

**EUROPEAN SEARCH REPORT**

Application number

EP 85 30 6016

| | DOCUMENTS CONSIDERED TO BE RELEVANT | | Page 3 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | 1977 IEEE INTERNATIONAL CONFERENCE ON ACOUSTICS, SPEECH AND SIGNAL PROCESSING, 9th-11th May 1977, Hartford, US, IEEE, New York, US; J.J. WOLF et al.: "The HWIM speech understanding system" <br> * Page 785, left-hand column, lines 17-31 * | 1 | |
| A | SIEMENS REVIEW, vol. XLVII, no. 4, July/August 1980, pages 16,17, Erlangen, DE; D. KLUGMANN: "Talking to the computer" <br> * Page 17, left-hand column, lines 20-30 * | 7-9 | |
| A | COMPUTER DESIGN, vol. 21, no. 3, March 1982, pages 147-152, Winchester, US; R.D. IVERSON et al.: "A software interface for speech recognition" <br> * Page 149, left-hand column, lines 1-10 * | 7-9 | TECHNICAL FIELDS SEARCHED (Int. Cl.4) |
| A | PROCEEDINGS OF THE IEEE, vol. 64, no. 4, April 1976, pages 487-501, IEEE, New York, US; T.B. MARTIN: "Practical applications of voice input to machines" <br> * Paragraph VI, B3: "Vocabulary subgroupings" * | 7,9 | |

-/-

The present search report has been drawn up for all claims

| Place of search <br> THE HAGUE | Date of completion of the search <br> 29-11-1985 | Examiner <br> ARMSPACH J.F.A.M. |
|---|---|---|

| | **DOCUMENTS CONSIDERED TO BE RELEVANT** | | Page 4 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | IBM TECHNICAL DISCLOSURE BULLETIN, vol. 13, no. 3, August 1970, page 73, New York, US; G.L. CLAPPER: "Word recognition system with automatic selection of word library" * Whole document * | 7,8 | |
| A | ICASSP '80, IEEE INTERNATIONAL CONFERENCE ON ACOUSTICS, SPEECH AND SIGNAL PROCESSING, 9th-11th April 1980, pages 182-185, Denver, US, vol. 1, IEEE, New York, US; L.R. RABINER et al.: "Application of isolated word recognition to a voice controlled repertory dialer system" * Page 182, right-hand column, lines 23-25 * | 7 | |
| | | | TECHNICAL FIELDS SEARCHED (Int. Cl.4) |
| A | INTERNATIONAL JOURNAL MAN-MACHINE STUDIES, vol. 14, 1981, pages 13-27, GB; B.E. PAY et al.: "An approach to the automatic recognition of speech" * Page 16: "Vocabulary subsets" * | 7,9 | |
| | --- -/- | | |

The present search report has been drawn up for all claims

| Place of search THE HAGUE | Date of completion of the search 29-11-1985 | Examiner ARMSPACH J.F.A.M. |
|---|---|---|

European Patent Office

**EUROPEAN SEARCH REPORT**

Application number

EP 85 30 6016

| DOCUMENTS CONSIDERED TO BE RELEVANT | | | Page 5 | |

| Category | Citation of document with indication, where appropriate, of relevant passages | Relevant to claim | CLASSIFICATION OF THE APPLICATION (Int. Cl 4) |
|---|---|---|---|
| A | THE BELL SYSTEM TECHNICAL JOURNAL, vol. 59, no. 1, January 1980, pages 119-137, American Telephone and Telegraphe Co., New York, US; S.E. LEVINSON et al.: "A conversational-mode airline information and reservation system using speech input and output" <br> * Paragraphe 2.2: "Architecture" * | 10,12, 13 | |
| | ----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 29-11-1985 | ARMSPACH J.F.A.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82